# EUROPEAN PATENT APPLICATION

(11) **EP 4 700 957 A1**
(43) Date of publication of application: **25.02.2026**
(21) Application number: 24931117.6
(22) Date of filing: 19.11.2024
(51) Int. Cl.: H01M 50/383, H01M 10/658, H01M 50/242, H01M 50/249

(54) **BATTERY MODULE, AND BATTERY PACK AND VEHICLE INCLUDING SAME**

(30) Priority: 18.03.2024 KR 20240037209
(71) Applicant: LG Energy Solution, Ltd., Seoul 07335 (KR)
(72) Inventor: PARK, Ju-Hun, Daejeon 34122 (KR)
(74) Representative: BCKIP Part mbB
(86) International application number: PCT/KR2024/018258
(87) International publication number: WO 2025/198119

(57) **Abstract**

Disclosed is a battery module, and a battery pack and a vehicle including the same. The battery module includes a battery cell stack in which a plurality of battery cells are stacked; a module case in which the battery cell stack is accommodated; a flame suppression pad disposed between the plurality of battery cells within the module case; and a close contact member coupled to the module case and in close contact with the flame suppression pad.

## Description

### TECHNICAL FIELD

This application is based on and claims priority from Korean Patent Application No. 10-2024-0037209, filed on March 18, 2024, with the Korean Intellectual Property Office, the disclosure of which is incorporated herein in its entirety by reference.

The present disclosure relates to a battery module, and a battery pack and a vehicle including the same, and more specifically, to a battery module capable of preventing propagation of flame, gas or high-temperature particles, and a battery pack and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

In the battery module, a refractory pad is disposed between a battery cell accommodated inside the battery module and a neighboring battery cell. However, due to errors in processing, etc., the module case of the battery module and the refractory pad may be not in close contact.

In addition, if the module case and the refractory pad may be not in close contact, a gap is formed between the module case and the refractory pad, and if a thermal event occurs, a flame or gas is propagated to another battery cell disposed nearby through the gap.

If flame or gas is propagated to another battery cell or another battery module, a thermal runaway phenomenon may occur, and if the flame leaks to the outside due to the thermal runaway phenomenon, there is a problem that the driver of the electric vehicle may be burned or put in a dangerous situation.

Alternatively, there is a problem in that the battery module or battery pack is damaged or burned down by a chain reaction of flames caused by flame propagation, so it may be impossible to secure the stability of the battery module or battery pack.

### DISCLOSURE

### Technical Problem

The present disclosure is directed to providing a battery module capable of preventing flame, gas or high-temperature particles generated in one battery cell from being propagated to another neighboring battery cell or another battery module, and a battery pack and a vehicle including the same.

In addition, the present disclosure is directed to providing a battery module capable of emitting flame, gas or high-temperature particles in a preset direction, and a battery pack and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a battery cell stack in which a plurality of battery cells are stacked; a module case in which the battery cell stack is accommodated; a flame suppression pad disposed between the plurality of battery cells within the module case; and a close contact member coupled to the module case and in close contact with the flame suppression pad.

In an embodiment, the module case may include an upper module case, and the close contact member may be coupled to the upper module case.

In an embodiment, the close contact member may be fixed to the upper module case by bonding.

In an embodiment, the close contact member may be formed to be deformable when coming into close contact with the flame suppression pad.

In an embodiment, the close contact member may be made of a heat-resistant material with elasticity.

In an embodiment, the close contact member and the flame suppression pad may be made of the same material or different materials.

In an embodiment, the close contact member may be made of a silicone-based material.

In an embodiment, the close contact member may be formed in a curved shape before coming into close contact with the flame suppression pad.

In an embodiment, the close contact member may be formed in a semicircular shape before coming into close contact with the flame suppression pad.

In an embodiment, when the flame suppression pad pressurizes the close contact member and comes into close contact with the close contact member, the close contact member may change a shape from a semicircular shape to a W shape.

In an embodiment, the close contact member may be deformed to surround at least a portion of an upper side of the flame suppression pad.

In an embodiment, the close contact member may be deformed into a W shape due to swelling of the battery cell.

In an embodiment, the module case may be formed in one piece.

Meanwhile, according to another aspect of the present disclosure, there may be provided a battery pack including the battery module described above, and a vehicle including the battery module described above.

### Advantageous Effects

The embodiments of the present disclosure have the effect of preventing flame, gas or high-temperature particles generated in one battery cell from being propagated to another neighboring battery cell or another battery module.

In addition, the present disclosure has the effect of being able to discharge flame, gas or high-temperature particles in a preset direction.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic overall perspective view showing a battery module according to an embodiment of the present disclosure.
FIG. 2 is a cross-sectional view showing the battery module according to an embodiment of the present disclosure, in which an upper module case is separated from a side module case.
FIG. 3 is an enlarged view showing part A of FIG. 2.
FIG. 4 is a cross-sectional view showing the battery module according to an embodiment of the present disclosure, in which the upper module case is coupled to the side module case.
FIG. 5 is an enlarged view showing part B of FIG. 4.
FIG. 6 is a drawing showing a case where a thermal event occurs in FIG. 4.
FIG. 7 is a drawing showing a case where swelling occurs in the battery cell in FIG. 4.
FIG. 8 is a drawing schematically showing the configuration of a battery pack including the battery module according to each embodiment of the present disclosure.
FIG. 9 is a drawing for explaining a vehicle including the battery pack of FIG. 8.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

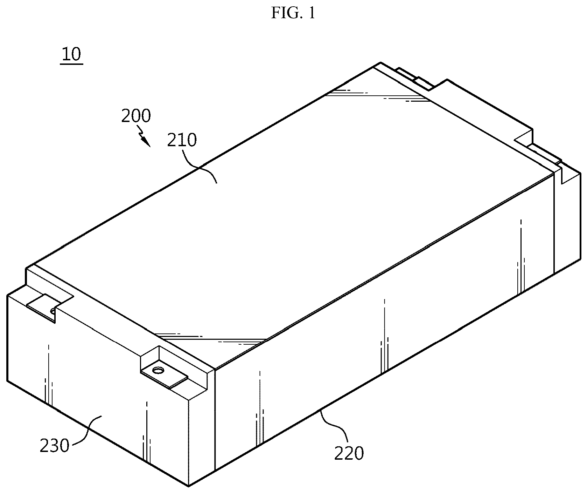

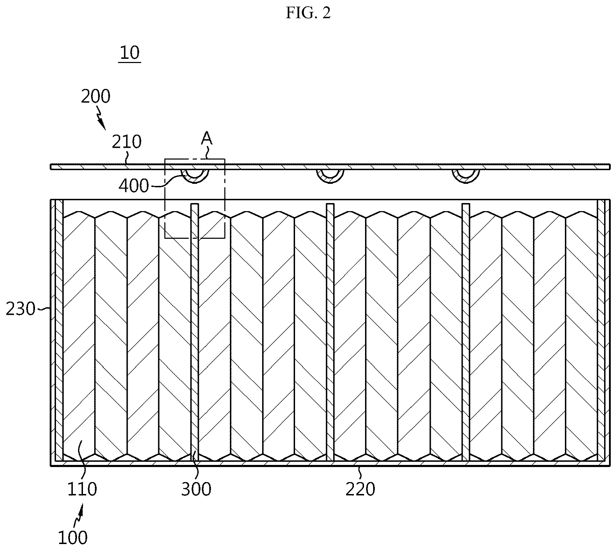

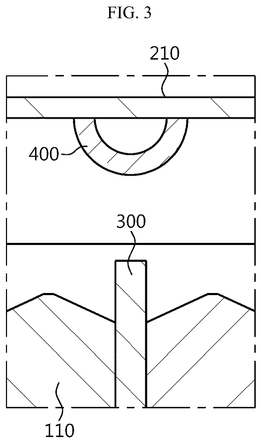

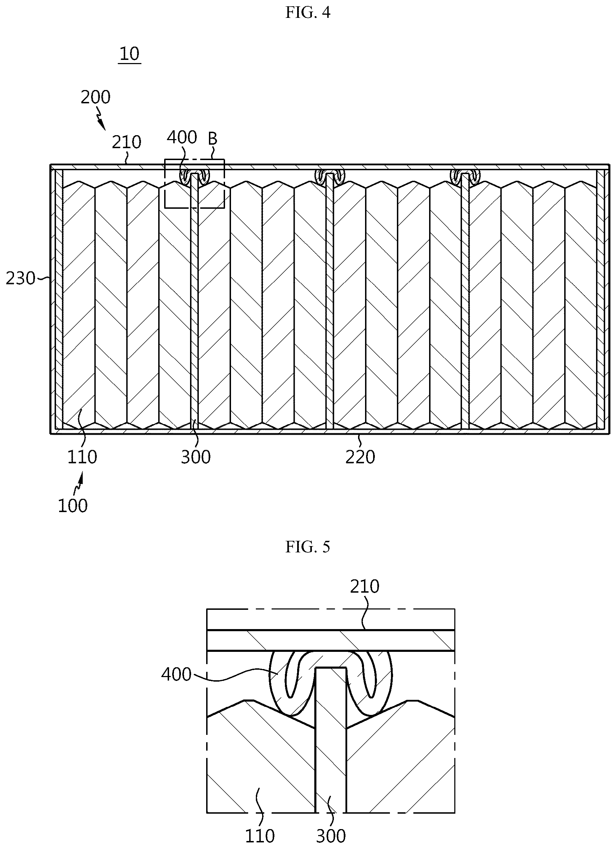

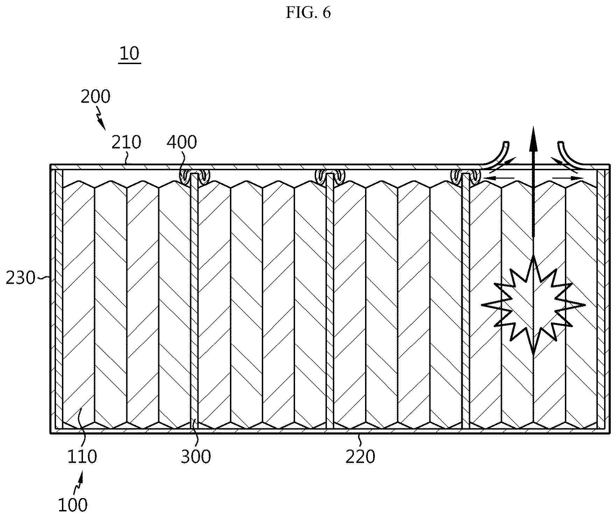

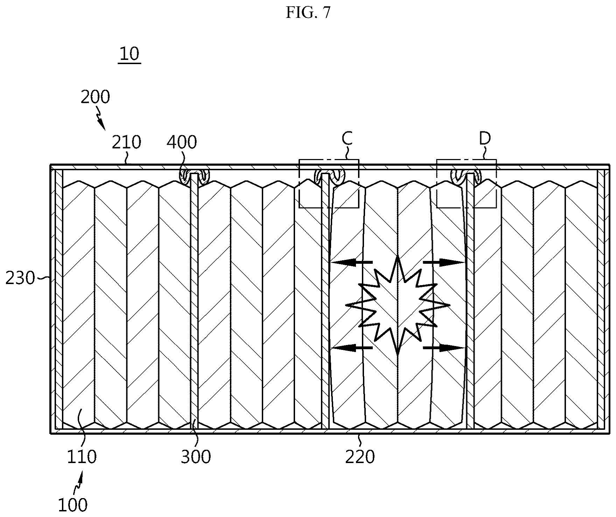

FIG. 1 is a schematic overall perspective view showing a battery module according to an embodiment of the present disclosure, FIG. 2 is a cross-sectional view showing the battery module according to an embodiment of the present disclosure, in which an upper module case is separated from a side module case, FIG. 3 is an enlarged view showing part A of FIG. 2, FIG. 4 is a cross-sectional view showing the battery module according to an embodiment of the present disclosure, in which the upper module case is coupled to the side module case, FIG. 5 is an enlarged view showing part B of FIG. 4, FIG. 6 is a drawing showing a case where a thermal event occurs in FIG. 4, and FIG. 7 is a drawing showing a case where swelling occurs in the battery cell in FIG. 4.

Referring to FIGS. 1 to 5, a battery module 10 according to an embodiment of the present disclosure includes a battery cell stack 100, a module case 200, a flame suppression pad 300, and a close contact member 400.

The battery cell stack 100 may be configured to stack a plurality of battery cells 110. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

The plurality of battery cells 110 may be electrically connected via a bus bar (not shown). However, the bus bar is not shown in the drawings.

The battery cell stack 100 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

The battery cell stack 100 is accommodated in a module case 200. In addition, the module case 200 may include an upper module case 210, a lower module case 220, and a side module case 230. As shown in FIG. 4, the close contact member 400, explained later, may be formed on the upper module case 210, but is not limited thereto.

The module case 200 surrounds the battery cells 110 and thereby protects the battery cells 110 from external vibrations or shocks.

The module case 200 may include a mica plate made of mica having both thermal insulation and heat resistance to prevent flame leakage. Here, the mica plate may include not only a flat mica plate but also a shape having a mixture of flat and curved surfaces.

The module case 200 may be formed in a shape corresponding to the shape of the battery cell stack 100. For example, if the battery cell stack 100 is formed in a hexahedral shape with a rectangular cross-section, the module case 200 may also be formed in a hexahedral shape corresponding thereto.

The module case 200 may be formed by, for example, bending a metal plate, whereby the module case 200 may be manufactured in an integral form. If the module case 200 is manufactured in an integral form, the coupling process may become easy and simple. Alternatively, the module case 200 may be provided in a separate form and coupled by welding, etc. However, the material of the module case 200 is not limited to a metal material.

If the module case 200 is formed integrally or coupled by welding, an adhesive is unnecessary. Thus, even if the temperature rises inside the battery module 10, the upper module case 210 does not separate from the side module case 230, thereby preventing flame, gas, or high-temperature particles from being emitted all at once in an undesirable direction.

The flame suppression pad 300 blocks flame, gas, or high-temperature particles generated from any battery cell 110 from propagating to another battery cell 110. To this end, as shown in FIGS. 2 and 4, the flame suppression pad 300 may be disposed between the plurality of battery cells 110 within the module case 200. For example, the flame suppression pad 300 may be disposed between four battery cells 110, but is not limited thereto.

Here, the flame suppression pads 300 may be arranged at equal intervals or may be arranged at different intervals.

The flame suppression pad 300 may be made of various materials, and for example, may be made of a silicone foam pad so as to prevent the transfer of flame and heat generated from the battery cell 110. The silicone foam pad is a foamed pad with pores formed therein, and has high thermal and chemical stability and excellent flame retardancy and insulation properties. Therefore, if the flame suppression pad 300 is made of a silicone foam pad, the propagation of flame, gas, or high-temperature particles may be reliably prevented.

In addition, the flame suppression pad 300 may also play a role in absorbing swelling when swelling (a phenomenon in which the battery cell 110 is inflated) occurs in the battery cell 110. This will be explained later.

Referring to FIG. 4, the close contact member 400 is coupled to the module case 200 and comes into close contact with the flame suppression pad 300. The close contact member 400 may be coupled to the upper module case 210 or may be coupled to the lower module case 220. However, for convenience of explanation, the following description focuses on the case where the close contact member 400 is coupled to the upper module case 210.

Referring to FIGS. 2 and 3, the close contact member 400 may be coupled to the upper module case 210 in various ways, and, for example, the close contact member 400 may be fixed to the upper module case 210 by bonding, but is not limited thereto.

FIG. 2 shows a state in which the upper module case 210 is separated from the side module case 230 before the upper module case 210 is coupled to the side module case 230.

The close contact member 400 may be formed in a curved shape before coming into close contact with the flame suppression pad 300. As in FIG. 2, when the upper module case 210 is separated from the side module case 230, the close contact member 400 is also separated from the flame suppression pad 300 without coming into contact with the flame suppression pad 300.

At this time, that is, before the close contact member 400 comes into contact with the flame suppression pad 300, the close contact member 400 may be formed in, for example, a semicircular shape. However, the shape of the close contact member 400 is not limited thereto.

Referring to FIGS. 4 and 5, the close contact member 400 may be formed to be deformable when coming into close contact with the flame suppression pad 300.

That is, if the upper module case 210 of FIG. 2 is coupled to the side module case 230 as in FIG. 4, the flame suppression pad 300 pushes up the approximate center (not necessarily the center) of the close contact member 400, whereby the close contact member 400 comes into close contact with the flame suppression pad 300. Here, the close contact member 400 may be deformed to surround at least a portion of the upper side of the flame suppression pad 300.

The close contact member 400 may be made of a heat-resistant material with elasticity. For example, the close contact member 400 may be made of a silicone-based material, but is not limited thereto.

In addition, the close contact member 400 and the flame suppression pad 300 may be made of the same material. However, the present disclosure is not limited thereto, and the close contact member 400 and the flame suppression pad 300 may be made of different materials.

As shown in FIGS. 4 and 5, if the flame suppression pad 300 comes into contact with the close contact member 400 and pressurizes the close contact member 400, the close contact member 400 is deformed from a semicircular shape to an approximately W shape, and thereby the close contact member 400 may come into close contact with the flame suppression pad 300.

If the close contact member 400 comes into close contact with the flame suppression pad 300 in this way, as shown in FIG. 6, flame, gas, or high-temperature particles generated from any battery cell 110 are blocked by the close contact member 400 and the flame suppression pad 300 (see the arrows in FIG. 6).

That is, the above configuration may prevent flame, gas or high-temperature particles from propagating to other battery cells 110.

As described above, the flame suppression pad 300 may absorb swelling when swelling occurs in the battery cell 110. Referring to FIG. 7, if swelling occurs in the battery cell 110, the flame suppression pad 300 may be deformed to absorb the swelling, and accordingly, the close contact member 400 may also be deformed into a W shape (see C and D of FIG. 7).

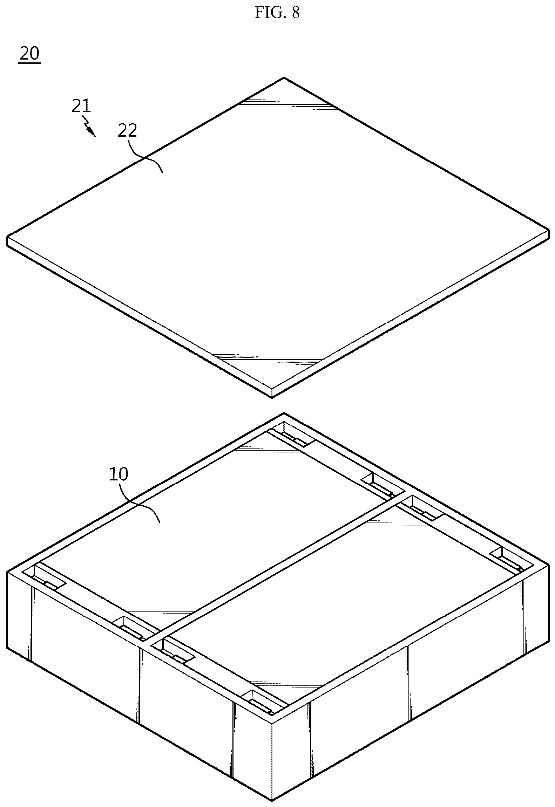

Meanwhile, a battery pack 20 (see FIG. 8), explained later, may include a pack case 21, and the pack case 21 may include an upper pack case 22. A space may be formed between the upper pack case 22 and the upper module case 210.

In addition, the flame, gas or high-temperature particles generated from any battery cell 110 may be discharged in a preset direction through the space between the upper pack case 22 and the upper module case 210.

Accordingly, the battery module 10 according to an embodiment of the present disclosure has the effect of enabling directional venting that may discharge flame, gas or high-temperature particles in a direction intended by the designer.

FIG. 8 is a drawing schematically showing the configuration of a battery pack including the battery module according to each embodiment of the present disclosure.

Referring to FIG. 8, a battery pack 20 according to an embodiment of the present disclosure may include one or more battery modules 10 according to each embodiment of the present disclosure described above.

In addition, the battery pack 20 may further include a pack case 21 for accommodating the battery module 10, and various devices for controlling charging and discharging of the battery cell 110 included in the battery module 10, such as a BMS, a current sensor, and a fuse.

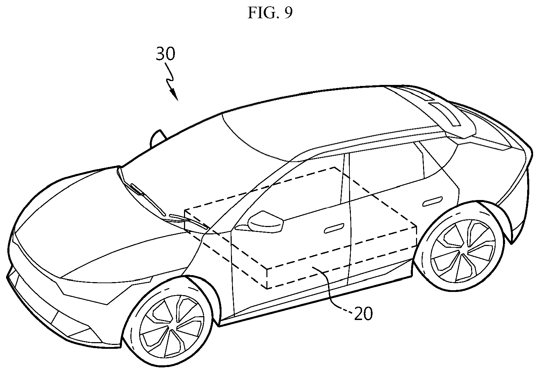

FIG. 9 is a drawing for explaining a vehicle including the battery pack of FIG. 8.

Referring to FIG. 9, a vehicle 30 according to an embodiment of the present disclosure may include one or more battery modules 10 according to each embodiment of the present disclosure or one or more battery packs 20 according to each embodiment of the present disclosure. Here, the battery pack 20 may include one or more battery modules 10 according to each embodiment of the present disclosure.

Here, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a battery cell stack in which a plurality of battery cells are stacked;
a module case in which the battery cell stack is accommodated;
a flame suppression pad disposed between the plurality of battery cells within the module case; and
a close contact member coupled to the module case and in close contact with the flame suppression pad.

2. The battery module according to claim 1,
wherein the module case includes an upper module case, and
wherein the close contact member is coupled to the upper module case.

3. The battery module according to claim 2,
wherein the close contact member is fixed to the upper module case by bonding.

4. The battery module according to claim 1,
wherein the close contact member is formed to be deformable when coming into close contact with the flame suppression pad.

5. The battery module according to claim 4,
wherein the close contact member is made of a heat-resistant material with elasticity.

6. The battery module according to claim 5,
wherein the close contact member and the flame suppression pad are made of the same material or different materials.

7. The battery module according to claim 5,
wherein the close contact member is made of a silicone-based material.

8. The battery module according to claim 1,
wherein the close contact member is formed in a curved shape before coming into close contact with the flame suppression pad.

9. The battery module according to claim 8,
wherein the close contact member is formed in a semicircular shape before coming into close contact with the flame suppression pad.

10. The battery module according to claim 9,
wherein when the flame suppression pad pressurizes the close contact member and comes into close contact with the close contact member, the close contact member changes a shape from a semicircular shape to a W shape.

11. The battery module according to claim 10,
wherein the close contact member is deformed to surround at least a portion of an upper side of the flame suppression pad.

12. The battery module according to claim 10,
wherein the close contact member is deformed into a W shape due to swelling of the battery cell.

13. The battery module according to claim 1,
wherein the module case is formed in one piece.

14. A battery pack comprising the battery module according to any one of claims 1 to 13.

15. A vehicle comprising the battery module according to any one of claims 1 to 13.
